# EUROPÄISCHE PATENTSCHRIFT

(11) **EP 0 631 117 B1**
(45) Veröffentlichungstag und Bekanntmachung des Hinweises auf die Patenterteilung: **04.10.1995**
(21) Anmeldenummer: 94106938.7
(22) Anmeldetag: 04.05.1994
(51) Int. Cl.: G01G 19/414, G07G 1/00

(54) **Wägevorrichtung für den Kassenplatz eines Ladengeschäfts**
Weighing apparatus for a supermarket checkout counter
Dispositif de pesage pour la caisse des comptoirs des supermarchés

(30) Priorität: 10.06.1993 DE 4319299
(43) Veröffentlichungstag der Anmeldung: 28.12.1994
(73) Patentinhaber: Bizerba GmbH & Co. KG, D-72336 Balingen (DE)
(72) Erfinder: Kraft, Horst, D-72336 Balingen (DE); Purr, Horst, D-78144 Tennenbronn (DE); Engelhardt, Edgar, D-72336 Balingen (DE)
(74) Vertreter: Hoeger, Stellrecht & Partner

(56) Entgegenhaltungen:
- WO-A-86/05270
- WO-A-88/04770
- US-A- 4 971 176
- US-A- 4 971 177
- US-A- 5 139 100
- US-A- 5 143 164

## Beschreibung

Die Erfindung betrifft eine Wägevorrichtung für den Kassenplatz eines Ladengeschäfts mit einem Waagengestell, mit einer Lastplatte zur Aufnahme einer zu wägenden Ware, mit einem die Lastplatte abstützenden Träger, mit einem durchgehenden Fenster in der Lastplatte und im Träger, mit einer das Fenster überdeckenden, strahlendurchlässigen Scheibe, mit einem unter der Scheibe auf dem Waagengestell angeordneten Lesegerät zum Erkennen von Codierungen an der Ware, mit einer vom Träger belasteten Wägezelle, mit einer elektronischen Auswerteschaltung zur Bestimmung des Gewichtes der Ware und deren Preis und mit einer Anzeige zum Anzeigen des Gewichtes und des Preises der Ware.

Eine Vorrichtung dieser Art ist aus US-4 881 606 bekannt. Bei der bekannten Vorrichtung wird die Lastplatte brückenartig auf zwei Wägezellen abgestützt. Die Verwendung zweier Wägezellen in der Wägevorrichtung bedingt einen relativ hohen Platzbedarf, welcher die Vorrichtung von Haus aus verteuert. Besonders nachteilig kann bei Verwendung zweier Wägezellen jedoch sein, daß deren gemeinsame Temperaturkompensation schwierig und nur durch besondere, wiederum kostspielige Maßnahmen erreichbar ist. Auch können gegenseitige mechanische Verspannungen der beiden Wägezellen über die Lastplatte und deren Träger zu unerwünschten Fehlwägungen Anlaß geben. Zur Vermeidung von Fehlwägungen ist ferner eine Querkraftlimitierung erforderlich.

Die bekannte Vorrichtung enthält ferner keine elektronische Auswerteschaltung zur Bestimmung des Gewichts und des Preises der gewogenen Ware. Die von den Wägezellen gelieferten elektrischen Signale werden vielmehr einer elektronischen Auswerteschaltung zugeleitet, die an anderer Stelle, beispielsweise in der Kasse oder in einem besonderen Gehäuse mit Anzeige untergebracht ist. Derartige Wägevorrichtungen können daher nicht wie normale Waagen, d.h. für sich als unabhängige Einheiten, geeicht und von den zuständigen Behörden zugelassen werden. Eine Eichung und Zulassung ist nur im Rahmen des Gesamtsystems, also einschließlich der separat von der Waage untergebrachten elektronischen Auswerteschaltung mit Anzeige usw. möglich. Ein solches Eich- und Zulassungsverfahren ist jedoch für alle Beteiligten umständlich, zeitraubend und kostspielig.

Es ist Aufgabe der Erfindung, eine gattungsgemäße Wägevorrichtung bei hoher Fehlersicherheit und kleinem Platzbedarf, insbesondere kleiner Bauhöhe und kleinen Außenabmessungen, so auszubilden, daß eine unmittelbare Preisberechnung in der Wägevorrichtung selbst möglich und diese also unmittelbar als Einheit einer Eichung und Zulassung unterwerfbar ist.

Die Aufgabe wird erfindungsgemäß dadurch gelöst, daß
- lediglich eine einzige, vorzugsweise als Biegestab ausgebildete Wägezelle vorgesehen und soweit als möglich seitenversetzt stationär auf dem Waagengestell angeordnet ist;
- der Träger in sich biegesteif ausgebildet und in der Nähe seiner einen Randkante einseitig so mit der Wägezelle starr verbunden ist, daß sein Fenster freitragend über dem Waagengestell gehalten ist;
- auf dem Waagengestell das Lesegerät auf der einen Seite und die elektronische Auswerteschaltung auf der anderen Seite der Wägezelle liegen und
- die elektronische Auswerteschaltung mit Mikrocomputer und Analog-Digital-Wandler eine selbsttätige Gewichtsbestimmung und Preisberechnung der gewogenen Ware durchführt.

Die nachstehende Beschreibung einer bevorzugten Ausführungsform der Erfindung dient im Zusammenhang mit beiliegender Zeichnung der weiteren Erläuterung. Es zeigen:
- Fig. 1: schematisch in Draufsicht den Kassenplatz eines Ladengeschäftes, insbesondere Supermarktes;
- Fig. 2: schematisch eine Seitenansicht einer Wägevorrichtung für den Kassenplatz aus Fig. 1;
- Fig. 3: eine Draufsicht der Wägevorrichtung aus Fig. 2;
- Fig. 4: eine auseinandergezogene Darstellung der Wägevorrichtung aus Fig. 2 und 3 mit Anzeigevorrichtung;
- Fig. 5: einen Kassentisch mit eingebauter Lastplatte;
- Fig. 6: einen Sensor zum Abfühlen der Ränder der Lastplatte aus Fig. 5 und
- Fig. 7: ein Blockschaltbild der Wägevorrichtung.

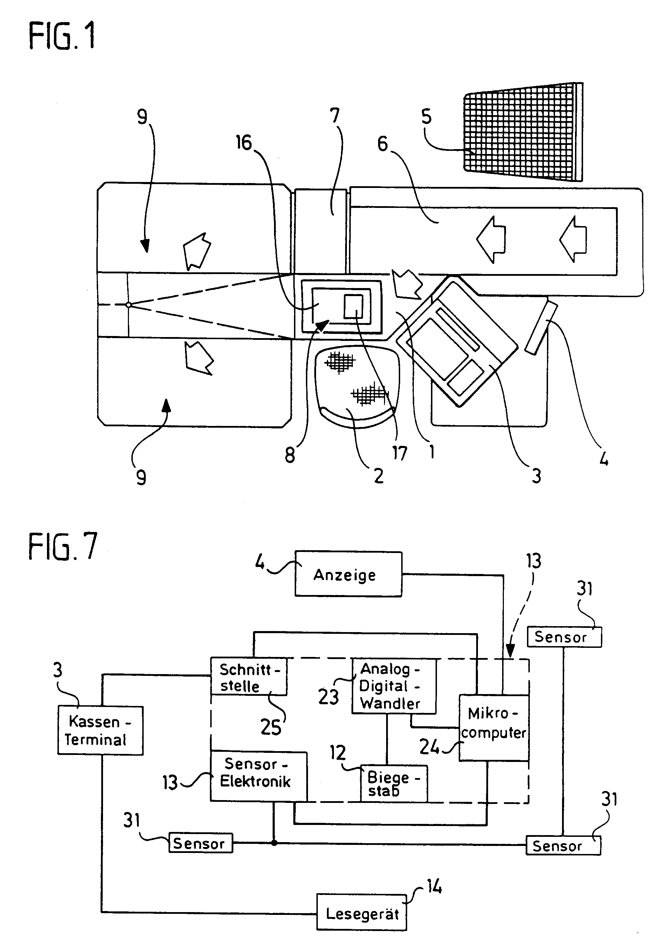

Fig. 1 zeigt schematisch in Draufsicht den Kassenplatz eines größeren Ladengeschäfts, z.B. eines Super- oder Verbrauchermarkts, an dem eine Kassiererin die Preise der von einem Kunden eingekauften Waren feststellt und addiert, so daß der Kunde alsdann die Bezahlung der gekauften Waren vornehmen kann. Derartige zentrale Kassenplätze (Points-of-Sale, abgekürzt POS) befinden sich in der Regel am Ausgang des Geschäftes, am sogenannten "Check-out". Ziel eines solchen zentralen Kassenplatzes ist die einheitliche Erfassung und Kontrolle des Warenumschlages einschließlich Sicherung gegen Betrug.

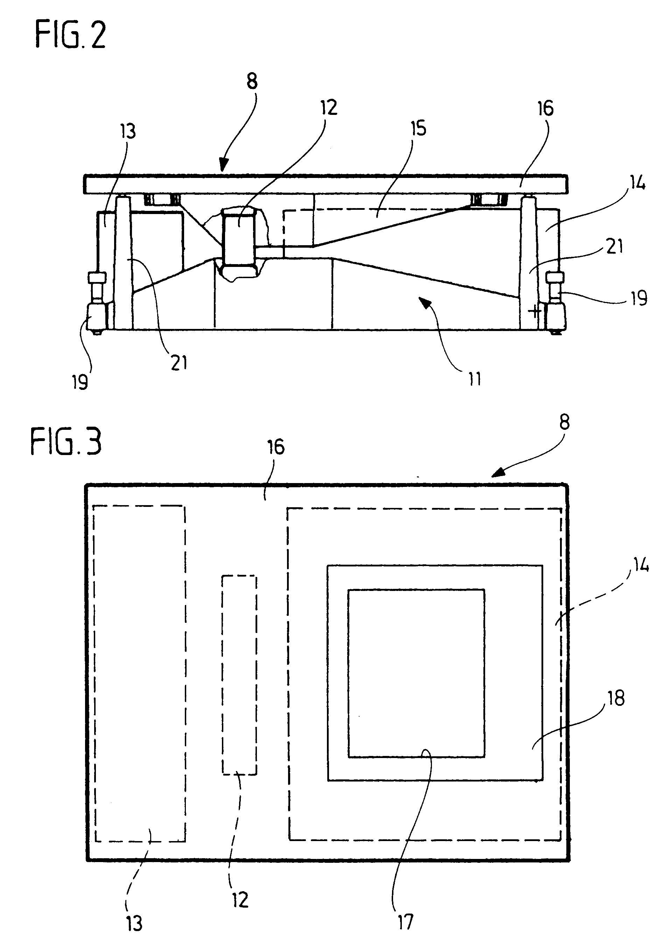

Der in Fig. 1 dargestellte zentrale Kassenplatz umfaßt einen Kassentisch 1, vor dem auf einem Stuhl 2 eine Kassiererin Platz nimmt. Dem Kassentisch 1 ist weiterhin ein übliches Kassenterminal 3 zugeordnet. Die errechneten Endpreise sind auf der Anzeige 4 des Kassenterminals 3 sowohl für die Kassiererin als auch für einen Kunden sichtbar, der die von ihm gekauften Waren, beispielsweise mit einem Einkaufskorb 5 an den Kassenplatz heranführt und dort auf ein Förderband 6 auflegt, welches seinerseits die aufgelegten Waren in Pfeilrichtung weitertransportiert. Dem Kassenplatz ist weiterhin eine Wägevorrichtung 8 mit einem unter einem Fenster 17 angeordneten Lesegerät 14 (Fig. 2, 3, 4) zum Erfassen eines an der Ware vorgesehenen Strichcodes zugeordnet. Die Wägevorrichtung 8 befindet sich im Griffbereich der auf dem Stuhl 2 sitzenden Kassiererin. Vom Lesegerät unter dem Fenster 17 erfaßte und gegebenenfalls von der Wägevorrichtung 8 gewogene Waren werden Stapelplätzen 9 zugeführt, wo sie der Kunde nach Bezahlung der Waren in Empfang nimmt.

Bei der Mehrzahl der heute an derartigen Kassenplätzen umgesetzten Waren handelt es sich um verpackte Waren, wobei auf den Verpackungen in Form eines Strichcodes der Verkaufspreis angegeben ist. Diese Waren werden lediglich von dem unter dem Fenster 17 befindlichen Lesegerät 14 (Scanner) abgetastet, worauf der Preis und die Summe verschiedener Preise vom Kassenterminal 3 zur Anzeige gebracht werden können. Es kommt jedoch auch vor, daß an zentralen Kassenplätzen eine Ware nach Gewicht anhand eines vorher festgelegten Grundpreises pro Gewichtseinheit abgerechnet wird, zu welchem Zwecke die Kassiererin zunächst das Gewicht dieser Ware mit der Wägevorrichtung 8 feststellen muß. Dazu wird beispielsweise die Ware auf die Wägevorrichtung 8 gelegt und die Kassiererin gibt den Grundpreis ein oder ruft über eine zugeordnete Artikelnummer die Daten aus einem Artikelspeicher ab. Die Eingabe kann am Kassenterminal oder über eine der Wägevorrichtung zugeordneten Tastatur (nicht dargestellt) erfolgen. Die Wägevorrichtung errechnet aus Gewicht und Grundpreis den Verkaufspreis und zeigt diese Daten an einer vom Kunden und von der Kassiererin einsehbaren, eichpflichtigen Anzeige 4 an.

Die gespeicherten Artikeldaten können auch einen zugehörigen Tarawert enthalten oder es wird ein Tarawert manuell eingegeben. In diesem Fall wird auch der Tarawert angezeigt.

Alle in der Anzeige 4 angezeigten Daten werden für jeden gewogenen Artikel von der Wägevorrichtung 8 an das Kassenterminal 3 zur weiteren Verarbeitung, insbesondere zur Bestimmung der Kundensumme übermittelt.

Die Fig. 2 und 3 zeigen den prinzipiellen Aufbau der Wägevorrichtung 8.

Auf einem starren Waagengestell 11 ist ein Wägesystem angeordnet, das im wesentlichen aus einem Kraftaufnehmer (Wägezelle) 12, beispielsweise in Gestalt eines Biegestabes oder eines Parallellenkers mit Magnetkraftkompensation an sich bekannter Art und einer später noch zu beschreibenden elektronischen Auswerteschaltung 13 besteht. Das Wägesystem ist auf dem Waagengestell 11 so weit seitlich (in Fig. 2 und 3 nach links) versetzt, daß auf der rechten Seite des Waagengestells 11 genügend Einbauraum für ein Lesegerät 14 verbleibt, welches ebenfalls fest mit dem Waagengestell 11 verbunden ist.

Der Kraftaufnehmer (Biegestab) 12 ist mit seiner Unterseite fest auf dem Waagengestell 11 angeordnet. Die Oberseite des Biegestabes 12 ist fest mit der Unterseite eines biegesteifen, z.B. aus Aluminiumguß bestehenden Trägers 15 verbunden, der seinerseits eine übliche Lastplatte 16 trägt, welche auch in Fig. 1 schematisch dargestellt ist und der Aufnahme der zu wägenden Waren dient. Wegen der bereits erwähnten weitgehend außermittigen Anordnung des Biegestabes 12, wobei dieser so weit in der Nähe des einen (in Fig. 2 linken) Randes des Trägers 15 und der Lastplatte 16 liegen soll, wie es der Platzbedarf der elektronischen Auswerteschaltung 13 zuläßt, ist der größere (in Fig. 2 rechts liegende) Teil des Trägers 15 und der Lastplatte 16 freitragend auf dem Biegestab 12 abgestützt. Der Biegestab verläuft parallel zu einer Randkante, vorzugweise parallel zur kürzeren Randkante der Lastplatte 16, wenn diese rechteckig ausgebildet ist.

Wie am besten aus Fig. 3 ersichtlich, weisen der Träger 15 und die Lastplatte 16 deckungsgleich übereinanderliegende Fenster 17 auf, die von einer strahlendurchlässigen, insbesondere lichtdurchlässigen Scheibe 18, beispielsweise aus Glas abgedeckt sind, wobei die Oberfläche der Scheibe 18 mit der Oberfläche der Lastplatte 16 bündig ist. Da im Betriebs- oder Wägezustand die Ware außermittig auf der Lastplatte 16 liegen kann, übt sie auf den sie abstützenden Biegestab 12 ein tordierendes Drehmoment um dessen Längsachse aus. Dieses Drehmoment wird durch die Parallelführung des Biegestabes und durch einen gegebenenfalls erforderlichen asymmetrischen Eckenabgleich eliminiert, so daß über Dehnungsmeßstreifen in an sich bekannter Weise ein elektrisches, gewichtsabhängiges Signal, unabhängig von einer außermittigen Belastung zur weiteren Verarbeitung in einem Analog-Digital-Wandler 23 der Auswerteschaltung 13 entsteht.

Auf diese Weise kommt man einmal mit einer einzigen Wägezelle, nämlich dem Biegestab 12 aus, es entfällt also beispielsweise die komplizierte Temperaturkompensation zweier solcher Wägezellen, zum anderen ist die Anordnung kompakt und platzsparend. Außerdem enthält die elektronische Auswerteschaltung 13, wie noch beschrieben werden wird, alle für den Betrieb einer Wägevorrichtung erforderlichen Elemente, so daß die beschriebene Wägevorrichtung 8 als unabhängige Einheit eichfähig ist und komplett einem behördlichen Zulassungsverfahren unterworfen werden kann.

Wie aus Fig. 2 weiterhin hervorgeht, sind am Waagengestell 11 an jeder Ecke Einstellschrauben 19 vorgesehen, die eine horizontale Ausrichtung der Lastplatte 16 - gegebenenfalls mit Hilfe einer nicht dargestellten Libelle - ermöglichen.

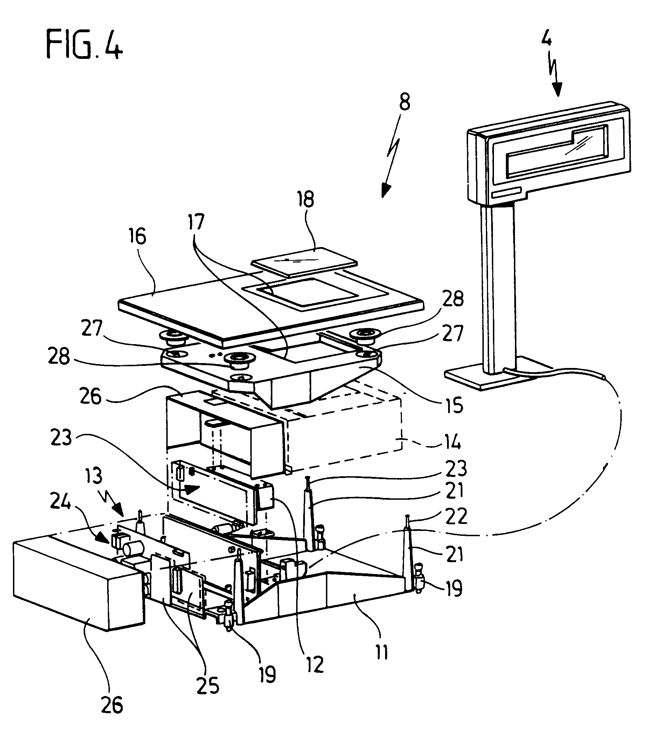

Außerdem ragen an jeder Ecke des Waagengestelles 11 Säulen 21 bis in die Nähe der Unterseite der Lastplatte 16, die als Überlastanschläge für die Lastplatte 16 wirken. Wenn die Lastplatte, insbesondere an einer ihrer Ecken überbelastet ist, stützt sie sich auf einer oder mehreren der Säulen 21 ab und kann sich nicht mehr weiterbewegen. Hierdurch ist insbesondere der Biegestab 12 vor einer Beschädigung geschützt. Die eigentlichen Überlastanschläge werden von an den oberen Enden der Säulen 21 vorgesehenen Schrauben 22 gebildet (Fig. 4), so daß die Anschläge insoweit einzeln einstellbar sind.

Die Fig. 4 zeigt eine praktische Ausführungsform der Wägevorrichtung 8 mit angeschlossener Anzeige 4. Man erkennt in Fig. 4 das Waagengestell 11 mit den Einstellschrauben 19 und den Schrauben 22 der säulenartigen Überlastanschläge 21 sowie den Biegestab 12, die elektronische Auswerteschaltung 13, das Lesegerät (Scanner) 14, den mit der Oberseite des Biegestabes 12 zu verbindenden, biegesteifen Träger 15 und die von diesem getragene Lastplatte 16, wobei an Träger 15 und Lastplatte 16 die durch die Scheibe 18 abgedeckten Fenster 17 ausgebildet sind.

Die elektronische Auswerteschaltung 13 umfaßt einen Analog-Digital-Wandler 23 sowie einen Mikrocomputer 24 mit Netzteil sowie eine oder mehrere, an sich bekannte Interface-Schaltungen 25 für den Anschluß weiterer Geräte, vorzugsweise für den Anschluß an das Kassenterminal 3. Durch Trennwände 26 ist dieser Bereich gegen störende Einflüsse und gegen unbefugte Eingriffe geschützt.

Der mit dem Biegestab 12 freitragend verbundene, biegesteife Träger 15 weist an seinen Ecken je einen Aufnahmezapfen 27 für die Lastplatte 16 auf. An der Unterseite der Lastplatte 16 sind vier Dämpfungselemente 28 befestigt, über welche sowohl die seitliche Fixierung der Lastplatte 16 auf dem Träger 15 als auch die Dämpfung von Stößen und Schwingungen erfolgt.

Zur Unterstützung der Dämpfung können am freitragenden Rand des Trägers 15 (in Fig. 2, 3, 4 rechts gelegen) auch ein oder mehrere hydraulische Dämpfer in bekannter Weise vorgesehen sein.

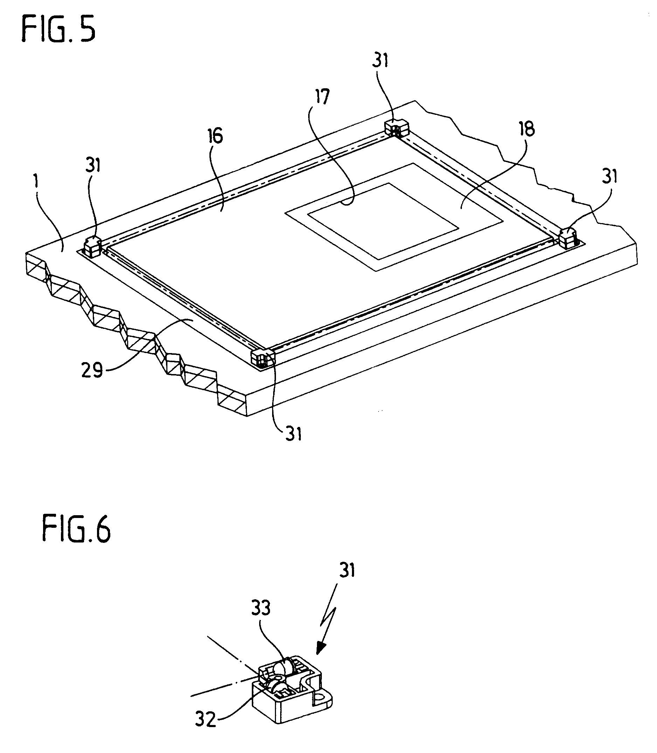

Die Fig. 5 zeigt den Einbau der Wägevorrichtung in den Kassentisch 1 des zentralen Kassenplatzes. Mittels der erwähnten Einstellschrauben 19 (Fig. 2 und 4) wird die Wägevorrichtung auf einer unterhalb des Kassentisches 1 angeordneten, festen Unterlage so ausgerichtet, daß die Lastplatte 16 einerseits horizontal liegt und im unbelasteten Zustand über die Oberfläche des Kassentisches 1 einen geringen Überstand von beispielsweise etwa 3 bis 5 mm hat.

An den Ecken der Lastplatte 16, vorzugsweise auf einem sie mit geringem Spielraum rings umschließenden Rahmen 29 sind Sensoren 31 eingebaut, welche die Ränder der Lastplatte 16 überwachen. Wenn eine Ware nicht korrekt aufliegt, also beispielsweise den Rahmen 29 oder den Kassentisch 1 berührt, d.h. über den Rand der Lastplatte 16 seitlich übersteht, wird über eine entsprechende, an sich bekannte Schaltung, welche in die elektronische Auswerteschaltung 13 integriert sein kann, eine Fehlermeldung ausgegeben und die Anzeige des Gewichts bzw. des Verkaufspreises der Ware unterdrückt. Man kann die Schaltung der Sensoren 31 auch so vornehmen, daß die Anzeige überhaupt nur dann freigegeben wird, wenn die Waage belastet ist und über einen einstellbaren Zeitraum von beispielsweise 500 msec keiner der Sensoren 31 einen Gegenstand erkennt. Dadurch wird verhindert, daß auf der Anzeige 4 bei zufälliger Berührung der Lastplatte 16 verwirrende Werte erscheinen.

Für die Sensoren 31 kommen vorzugsweise optoelektronische Elemente oder Elemente auf Ultraschall-Basis in Frage. Bei der bevorzugten Ausführungsform sind an allen vier Eckpunkten der Lastplatte 16 Sensoren 31 vorhanden, die - vgl. Fig. 6 - aus einer Infrarot-Sendediode 32 und einem Empfänger 33, z.B. einem Phototransistor bestehen können. Es genügt auch, solche Sensoren 31 lediglich an zwei Eckpunkten der Lastplatte 16 anzuordnen. An den beiden anderen Eckpunkten ist dann jeweils ein Reflektor vorgesehen, der die von einer Sendediode ausgehende Strahlung über einen Umlenkwinkel von 90° zu dem nächstliegenden Empfänger leitet.

Die Sensoren 31 sind in kompakte, abgedichtete Gehäuse eingebaut, so daß die rauhen Betriebsbedingungen am Kassentisch 1 und die regelmäßig erforderlichen Reinigungsarbeiten des Kassentisches kein Problem darstellen. Die Auswerteschaltung ist eigensicher ausgeführt, so daß bei Ausfällen von Bauelementen oder bei sehr starker Verschmutzung eine Fehlermeldung erfolgt.

Die dargestellte und beschriebene elektronische Auswerteschaltung 13 erfüllt alle für eine moderne Wägevorrichtung erforderlichen Funktionen, also insbesondere die Gewichts- und Preisberechnung einer auf die Lastplatte 16 aufgelegten Ware, wobei die Preisberechnung aufgrund des ermittelten Gewichtes und eines zugeordneten, z.B. über das erwähnte Lesegerät 14 erkannten Grundpreises der Ware erfolgt.

Die elektronische Auswerteschaltung 13 kann aber auch in an sich bekannter Weise Elemente enthalten, mit deren Hilfe Störschwingungen ausgefiltert werden, wie sie insbesondere durch Gebäudeschwingungen oder beim Auflegen der Ware auf die Lastplatte 16 entstehen. Hierdurch wird die "Beruhigungszeit" der Wägevorrichtung verkürzt. Es erfolgt eine schnellere Gewichts- und Preisanzeige.

Die Fig. 7 zeigt ein Blockschaltbild der Wägevorrichtung, das aus sich selbst heraus verständlich ist.

Das in die Wägevorrichtung 8 eingebaute Lesegerät 14 wird in der Regel ein sogenannter "Scanner" zum optischen Abtasten eines Strichcodes sein. Es kommen jedoch auch andere Lesegeräte, insbesondere zur Erkennung anderer Codierungen in Frage, beispielsweise eine CCD-Kamera, wobei CCD bedeutet: Charge-Coupled-Device.

Bei einer weiteren Ausgestaltung der beschriebenen Wägevorrichtung kann zwischen dem biegesteifen Träger 15 und der Lastplatte 16 auch eine (nicht dargestellte) Hubeinrichtung zum Anheben der Lastplatte 16 über den Kassentisch 1 angeordnet sein. Hierdurch ist es möglich, die Oberfläche der Lastplatte 16 beispielsweise bis zu 15 mm oder mehr über den Kassentisch anzuheben, so daß auch lange Gegenstände, welche die Lastplatte 16 an sich seitlich überragen, auf den Kassentisch nicht aufliegen, und die Wägung nicht gestört wird. In diesem Falle müssen selbstverständlich die Sensoren 31 ausgeschaltet werden.

## Patentansprüche

1. Wägevorrichtung (8) für den Kassenplatz eines Ladengeschäfts mit einem Waagengestell (11), mit einer Lastplatte (16) zur Aufnahme einer zu wägenden Ware, mit einem die Lastplatte abstützenden Träger (15), mit einem durchgehenden Fenster (17) in der Lastplatte und im Träger, mit einer das Fenster überdeckenden, strahlendurchlässigen Scheibe (18), mit einem unter der Scheibe auf dem Waagengestell angeordneten Lesegerät (14) zum Erkennen von Codierungen an der Ware, mit einer vom Träger (15) belasteten Wägezelle, mit einer elektronischen Auswerteschaltung (13) zur Bestimmung des Gewichtes der Ware und deren Preis, und mit einer Anzeige (4) zum Anzeigen des Gewichtes und des Preises der Ware,
**dadurch gekennzeichnet, daß**
- lediglich eine einzige Wägezelle (12) vorgesehen und soweit als möglich seitenversetzt stationär auf dem Waagengestell (11) angeordnet ist;
- der Träger (15) in sich biegesteif ausgebildet und in der Nähe seiner einen Randkante so mit der Wägezelle (12) starr verbunden ist, daß sein Fenster (17) freitragend über dem Waagengestell (11) gehalten ist;
- auf dem Waagengestell (11) das Lesegerät (14) auf der einen Seite und die elektronische Auswerteschaltung (13) auf der anderen Seite der Wägezelle (12) liegen und
- die elektronische Auswerteschaltung (13) mit Mikrocomputer (24) und Analog-Digital-Wandler (23) eine selbsttätige Gewichtsbestimmung und Preisberechnung der gewogenen Ware durchführt.

2. Wägevorrichtung nach Anspruchs 1, dadurch gekennzeichnet, daß die Wägezelle (12) als Biegestab ausgebildet ist.

3. Wägevorrichtung nach Anspruch 1, dadurch gekennzeichnet, daß die Ränder der Lastplatte (16) durch Sensoren (31) abfühlbar sind, welche eine fehlerhaft auf die Lastplatte aufgelegte, d.h. über deren Ränder überstehende Ware erkennen.

4. Wägevorrichtung nach Anspruch 1, dadurch gekennzeichnet, daß das Lesegerät (14) ein Scanner oder eine CCD-Kamera ist.

5. Wägevorrichtung nach Anspruch 1, dadurch gekennzeichnet, daß die Lastplatte (16) über vier Dämpfungselemente (28) auf dem biegesteifen Träger (15) aufliegt.

6. Wägevorrichtung nach Anspruch 5, dadurch gekennzeichnet, daß die Dämpfungselemente (28) gleichzeitig der seitlichen Fixierung der Lastplatte (16) auf dem biegesteifen Träger (15) dienen.

7. Wägevorrichtung nach Anspruch 1, dadurch gekennzeichnet, daß am freien Rand des biegesteifen Trägers (15) wenigstes ein hydraulischer Dämpfer angeordnet ist.

8. Wägevorrichtung nach Anspruch 1, dadurch gekennzeichnet, daß die elektronische Auswerteschaltung (13) auf die Lastplatte (16) einwirkende Störschwingungen ausfiltert.

9. Wägevorrichtung nach Anspruch 1, dadurch gekennzeichnet, daß sie in einem Kassentisch (1) versenkt angeordnet ist, und die Lastplatte (16) im unbelasteten Zustand geringfügig über den Kassentisch (1) übersteht.

10. Wägevorrichtung nach Anspruch 9, dadurch gekennzeichnet, daß zwischen dem biegesteifen Träger (15) und der Lastplatte (16) eine Hubeinrichtung zum Anheben der Lastplatte über den Kassentisch angeordnet ist.

11. Wägevorrichtung nach Anspruch 3 und 10, dadurch gekennzeichnet, daß bei Betätigung der Hubvorrichtung die Sensoren (31) inaktiviert sind.

12. Wägevorrichtung nach Anspruch 3, dadurch gekennzeichnet, daß die elektronische Auswerteschaltung (13) die Anzeige (4) nur dann freigibt, wenn die Lastplatte (16) belastet ist und keiner der Sensoren (31) innerhalb eines vorwählbaren Zeitraums ein Fehlersignal liefert.

## Claims

1. A weighing device (8) for the point-of-sale of a retail outlet having a scales stand (11), having a load plate (16) for receiving an article to be weighed, having a support (15) supporting the load plate, having a through-window (17) in the load plate and in the support, having a radiolucent plate (18) covering the window, having a reading device (14) disposed beneath the plate on the scales stand to detect codes on the article, having a weighing cell loaded by the support (15), having an electronic evaluation circuit (13) for determining the weight of the article and its price, and having a display (4) for displaying the weight and the price of the article,
**characterised in that**
- just a single weighing cell (12) is provided and as far as possible is disposed laterally offset in stationary manner on the scales stand (11);
- the support (15) is constructed to be intrinsically rigid and in the vicinity of its one edge is rigidly connected with the weighing cell (12) so that its window (17) is held cantilevered over the scales stand (11);
- on the scales stand (11) the reading device (14) lies on the one side and the electronic evaluation circuit (13) lies on the other side of the weighing cell (12) and
- the electronic evaluation circuit (13) with microcomputer (24) and digitiser (23) performs an automatic weight determination and price calculation of the weighed article.

2. A weighing device according to Claim 1,
**characterised in that** the weighing cell (12) is constructed as a bending bar.

3. A weighing device according to Claim 1,
**characterised in that** the edges of the load plate (16) can be sensed by sensors (31), which detect an article incorrectly laid on the load plate, i.e. protruding over its edges.

4. A weighing device according to Claim 1,
**characterised in that** the reading device (14) is a scanner or a CCD camera.

5. A weighing device according to Claim 1,
**characterised in that** the load plate (16) lies on the rigid support (15) via four damping components (28).

6. A weighing device according to Claim 5,
**characterised in that** the damping components (28) simultaneously serve for the lateral attachment of the load plate (16) to the rigid support (15).

7. A weighing device according to Claim 1,
**characterised in that** at least one hydraulic damper is disposed at the free edge of the rigid support (15).

8. A weighing device according to Claim 1,
**characterised in that** the electronic evaluation circuit (13) filters out spurious oscillation acting on the load plate (16).

9. A weighing device according to Claim 1,
**characterised in that** it is disposed sunk in a cash desk (1) and the load plate (16) slightly protrudes over the cash desk (1) in the unladen state.

10. A weighing device according to Claim 9,
**characterised in that** a lifting device for raising the load plate over the cash desk is disposed between the rigid support (15) and the load plate (16).

11. A weighing device according to Claim 3 and 10,
**characterised in that** the sensors (31) are inactivated when the lifting device is operated.

12. A weighing device according to Claim 3,
**characterised in that** the electronic evaluation circuit (13) only enables the display (4) if the load plate (16) is loaded and none of the sensors (31) supplies a error signal within a preselected period.

## Revendications

1. Dispositif de pesage (8) pour la caisse des comptoirs d'un magasin, comportant un bâti de balance (11), un plateau de charge (16) destiné à recevoir une marchandise à peser, un support (15) sur lequel s'appuie le plateau de charge, une fenêtre traversante (17) ménagée dans le plateau de charge et dans le support, une vitre (18), perméable aux rayons, recouvrant la fenêtre, un appareil de lecture (14) disposé sous la vitre sur le bâti de balance et destiné à lire des codages inscrits sur la marchandise, une cellule de pesage chargée par le support (15), un circuit d'analyse électronique (13) servant à déterminer le poids de la marchandise et son prix, et un afficheur (4) pour l'affichage du poids et du prix de la marchandise,
caractérisé en ce que
- il n'est prévu qu'une seule cellule de pesage (12) disposée sur le bâti de balance (11) de façon stationnaire avec un décalage latéral aussi important que possible;
- le support (15) est conçu de façon à résister par lui-même à la flexion, et il est raccordé de façon rigide à la cellule de pesage (12) à proximité d'un de ses bords d'arête de telle façon que sa fenêtre (17) soit maintenue en porte-à-faux au-dessus du bâti de balance (11) ;
- sur le bâti de balance (11), l'appareil de lecture (14) repose sur un côté de la cellule de pesage (12), tandis que le circuit d'analyse électronique (13) repose sur l'autre côté de cette cellule ;
- le circuit d'analyse électronique (13), comportant un micro-ordinateur (24) et un convertisseur analogique-numérique (23), effectue une détermination automatique du poids et un calcul automatique du prix de la marchandise pesée.

2. Dispositif de pesage selon la revendication 1, caractérisé en ce que la cellule de pesage (12) est réalisée sous la forme d'une barre de flexion.

3. Dispositif de pesage selon la revendication 1, caractérisé en ce que les bords du plateau de charge (16) peuvent être explorés par des capteurs (31) qui détectent une marchandise placée de façon erronée sur le plateau de charge, c'est-à-dire une marchandise qui dépasse des bords de ce plateau.

4. Dispositif de pesage selon la revendication 1, caractérisé en ce que l'appareil de lecture (14) est un scanner ou une caméra CCD.

5. Dispositif de pesage selon la revendication 1, caractérisé en ce que le plateau de charge (16) repose sur le support (15) résistant à la flexion par l'intermédiaire de quatre éléments amortisseurs (28).

6. Dispositif de pesage selon la revendication 5, caractérisé en ce que les éléments amortisseurs (28) servent en même temps à la fixation latérale du plateau de charge (16) sur le support (15) résistant à la flexion.

7. Dispositif de pesage selon la revendication 1, caractérisé en ce qu'au moins un amortisseur hydraulique est disposé sur le bord libre du support (15) résistant à la flexion.

8. Dispositif de pesage selon la revendication 1, caractérisé en ce que le circuit d'analyse électronique (13) élimine par filtrage les vibrations parasites agissant sur le plateau de charge (16).

9. Dispositif de pesage selon la revendication 1, caractérisé en ce qu'il est disposé en étant encastré dans une table de caisse (1), et en ce que le plateau de charge (16), à l'état non chargé, dépasse légèrement au-dessus de la table de caisse (1).

10. Dispositif de pesage selon la revendication 9, caractérisé en ce qu'un moyen de levage destiné à élever le plateau de charge au-dessus de la table de caisse est disposé entre le support résistant à la flexion (15) et le plateau de charge (16).

11. Dispositif de pesage selon les revendications 3 et 10, caractérisé en ce que, en cas d'actionnement du moyen de levage, les capteurs (31) sont inactivés.

12. Dispositif de pesage selon la revendication 3, caractérisé en ce que le circuit d'analyse électronique (13) ne valide l'afficheur (4) que lorsque le plateau de charge (16) est chargé et qu'aucun des capteurs (31) ne délivre un message d'erreur à l'intérieur d'une période de temps pouvant être sélectionnée au préalable.
